# EUROPEAN PATENT SPECIFICATION

(11) **EP 2 667 019 B1**
(45) Date of publication and mention of the grant of the patent: **12.04.2017**
(21) Application number: 13168913.5
(22) Date of filing: 23.05.2013
(51) Int. Cl.: F03D 1/06

(54) **Trailing edge tape**
Abströmkantenband
Bande de bord de fuite

(30) Priority: 25.05.2012 DK 201270280
(43) Date of publication of application: 27.11.2013
(73) Proprietor: Envision Energy (Denmark) ApS, 8600 Silkeborg (DK)
(72) Inventor: Grabau, Peter, 6000 Kolding (DK)
(74) Representative: Gregersen, Niels Henrik

(56) References cited:
- WO-A2-2011/157849
- US-A1- 2008 107 540
- US-A1- 2011 018 282
- US-A1- 2011 142 668

## Description

### Field of the Invention

The present invention relates to a wind turbine rotor blade suitable for a modem wind turbine, said wind turbine rotor blade having a length extending from a first end, e.g. a root end, to a second end, e.g. a tip end, said wind turbine rotor blade further comprises a leading edge and a trailing edge, where a pressure side and a suction side extends between said leading edge and trailing edge and thus define an airfoil shaped cross section, where said trailing edge along at least a part of said length of the wind turbine rotor blade comprises a trailing edge part, said trailing edge part comprises a first and a second installation flange each with a width, said installation flanges being arranged in connection with a trailing edge extender, where said first and second installation flanges both comprise an inner surface for installation on the pressure side and the suction side of said wind turbine rotor blade.

The invention further relates to a method for fitting a wind turbine rotor blade with a trailing edge part.

### Background of the Invention

It is well known that modem wind turbines are being tuned to perform optimum. To obtain optimum production, several problems or challenges need to be addressed. When it comes to designing and manufacturing rotor blades for wind turbines it is very important to use the best possible design of the airfoil i.e. the profile along the rotor blade has to have a certain and very precise shape.

The shape is very important due to several facts. First of all the aerodynamic shape of the rotor blade plays a big role in the efficiency of the rotor blade or the rotor comprising a number of rotor blades. A more efficient blade profile increases the potential power production of the wind turbine.

Another challenge when designing and producing wind turbine rotor blades is noise. Noise is a well-known problem, and a lot of factors have an influence on the noise level generated of the wind turbine rotor blades. One very important factor is the shape of the trailing edge of the wind turbine rotor blades.

The term trailing edge is well known within the wind industry and defines the "thin" edge along the wind turbine rotor blade where the air from the pressure side and the air from the suction side of the airfoil meet after having swept said pressure and suction side. In order to generate as little noise as possible it is very important that the trailing edge is relatively sharp or at least only has a thickness of a few millimetres, e.g. a thickness of 2 to 4 millimetres which is quite a challenge to manufacture. The very thin trailing edge of e.g. 2 millimeters is preferred as such a trailing edge will generate vortices with a sound with a frequency above 20.000 Hz. This frequency is above what is audible to the human ear.

Most wind turbine rotor blades are manufactured from fibre reinforced polymer, said fibres typically being glass fibres, carbon fibres or other types of suitable fibres, and a rotor blade is often manufactured as two shell parts glued together to form a rotor blade.

When manufacturing such rotor blade shells, the various parts of the shell have various thicknesses, and some parts comprise a larger fibre content than other parts of said rotor blade. The trailing edge needs to be thin, but when manufacturing the rotor blade shells there is a need to have at least some thickness at the trailing edge in order to be able to handle the rotor blade. After having assembled the rotor blade shells to form a rotor blade with a suction side and a pressure side, the trailing edge is typically shaped manually by grinding until the desired thickness and shape is reached. This is time- consuming and even though the work is done very carefully there is a tendency towards some unwanted variations.

Further it is well known that a serrated trailing edge will lower the aerodynamic noise, and there are several examples of serrated trailing edge designs which have been and still are being used at the trailing edge of wind turbine rotor blades.

In order to overcome the above-mentioned problems with noise, a number of different solutions have been used. US 8,083,488 B2, hereby incorporated for reference, describes a solution where a rotor blade extension is installed at the trailing edge of a wind turbine rotor blade.

According to US 8,083,488 B2 the rotor blade extension is installed at only one side of the wind turbine trailing edge, i.e. either on the pressure side or on the suction side. The rotor blade extension is made with a cutaway having a depth corresponding to the thickness of the trailing edge to obtain a flush surface between the rotor blade and the rotor blade extension to minimise noise emission. Further the rotor blade extensions are designed to be rather rigid and stiff and to comprise stress reducing notches that will relieve thermal stresses occurring between the rotor blade and the rotor blade extensions. Even further the rotor blade extensions is preferably installed using rivets or the like fitted in countersunk holes in the rotor blade as well as in the rotor blade extension.

The fact that the rotor blade extensions need a cutaway with at depth corresponding to the thickness of the trailing edge makes the solution unusable in many situations.

First of all the thickness of the trailing edge varies over the length of the wind turbine rotor blade, and thus the rotor blade extensions need to be manufactured according to the specific rotor blade type or even to the specific rotor blade as two blades are not 100% identical. A considerable workload and time for fitting the rotor blade extensions is thus needed in order to use the solution as described in US 8,083,488 B2.

US 2012/0134817 A1 discloses a trailing edge extender comprises two flanges with an adhesive layer that adheres to the pressure and suction sides of a wind turbine rotor blade respectively. A fibre reinforced element is arranged between the two flanges where its inner edge contacts the grained edge of the wind turbine rotor blade. A void is formed between the grained edge of the blade, the element and the two flanges, since the element has a different shape and thickness than the grained edge. This void allows moisture and particles due to friction between the element and the blade to form inside the void which in time will cause the trailing edge extender to fail and become loss. The two flanges are adhered to the blade and each other on site which increases the risk of moisture and dusts entering the void and causing the trailing edge extender to fail.

WO 2011/157849 A2 discloses a trailing edge part having a V-shaped body where the two legs form installation flanges configured to be mounted to two matching installation flanges of an I-beam arranged at the trailing edge of the wind turbine blade. This trailing edge part cannot be retrofitted to existing wind turbine blades. This solution is also not able to flex due to the pressure difference, when installed, as the intersection between the two legs defines the outermost trailing edge.

US 2008/0107540 A1 also discloses a trailing edge part having a V-shaped body, wherein a ductile material is arranged along the inner surfaces of the two legs and contacts the pressure and suction sides of the wind turbine blade. This solution requires a modification of the trailing edge of the wind turbine blade in order to install the trailing edge part so that the two legs are flushed with the surfaces of the pressure and suction sides.

US 2011/0142668 A1 further discloses a trailing edge part having a V-shaped body where the two legs form installation flanges configured to be mounted to two flange sections of the shell parts. A non-compressible material is arranged between the two flange sections and contacts the trailing edge part. This solution requires a rebate to be formed in the flange sections in order to install the trailing edge part so that the two legs are flushed with the pressure and suction sides, thus this solution cannot be retrofitted onto existing wind turbine blades.

US 2011/0018282 A1 discloses a trailing edge part integrated into the flue line between the two shell parts where the two legs intersect in an obtuse angle relative to each other. The two legs form a permanent joint, thus the outermost leg is not able to flex around this intersection area due to the pressure difference. This solution cannot be retrofitted onto existing wind turbine blades as it requires a modification of the trailing edge.

### Object of the Invention

It is an object of the invention to provide a wind turbine rotor blade comprising a trailing edge part which is easily installed, and which is universal and fits the trailing edge of a wind turbine rotor blade even if the thickness and general shape of the trailing edge vary along the length of the wind turbine rotor blade and/or from one rotor blade to another.

Further it is an object of the invention to provide a flexible trailing edge which can be installed during manufacturing of a wind turbine rotor blade or alternatively be retrofitted on site.

### Description of the Invention

As mentioned above the invention relates to a wind turbine rotor blade suitable for a modem wind turbine, said wind turbine rotor blade having a length extending from a first end e.g. a root end and to a second end e.g. a tip end, said wind turbine rotor blade further comprises a leading edge and a trailing edge, where a pressure side and a suction side extend between said leading edge and trailing edge and thus defines an airfoil shaped cross section.

At least along a part of said length of the wind turbine rotor blade, said trailing edge comprises a trailing edge part, said trailing edge part comprises a first and a second installation flange each with a width, said installation flanges being arranged in connection with a trailing edge extender, where said first and second installation flanges both comprise an inner surface for installation on the pressure side and the suction side of said wind turbine blade.

A trailing edge part will typically have a length of e.g. 50 to 100 centimetres or even more and will be installed at the trailing edge of the wind turbine rotor blade where there is a need for trailing edge improvement. By having said two installation flanges a very robust and secure installation is achieved, and, compared to the prior art solution mentioned in US 8,083,488 B2, there is no risk of the trailing edge part being broken along the trailing edge of the wind turbine rotor blade due to a notch effect which evidently will occur as the trailing edge part in US 8,083,488 B2 has a cutaway and only is fixated at one side of the wind turbine rotor blade. Further a noticeable advantage is that no matter how the trailing edge is shaped, the thickness or general shape of the trailing edge part will always flush with both sides i.e. the pressure side and the suction side of the wind turbine rotor blade.

The installation flanges will typically have a thickness of 0.1 to 0.3 millimetres, which is so little that there will be no disturbance of the laminar or turbulent flow of air over the pressure side and over the suction side of the rotor blade.

A trailing edge part according to the invention comprises two installation flanges and thus the trailing edge of the wind turbine rotor blade is covered completely from the outside and nothing has to be incorporated between the two shell parts during manufacturing of the rotor blade, which is very advantageous. Further there is a great advantage in that the trailing edge part is fixated to both the pressure and to the suction side of the rotor blade as the trailing edge part thus does not present an area with a notch which over time will lead to failure of the trailing edge part.

As already mentioned above a wind turbine rotor blade according to the invention may have a trailing edge part comprising an area at the intersection between said two installation flanges and said trailing edge extender, where a ductile material, e.g. a high viscosity adhesive, is arranged in said area, wherein ductile material is deformable in order to be pressed against the trailing edge of the wind turbine rotor blade to secure a good contact by filling a gap between said trailing edge and said area and to create a flexible area where the trailing edge extender can bend according to the pressure difference between the pressure side and the suction side. This will enable the trailing edge part to be fastened at the trailing edge - blunt or sharp - and to compensate for a void, or to fill a gap at the very outer trailing edge. At the same time such a deformable part of the trailing edge part will allow the trailing edge part to be fitted at any trailing edge even though there is a difference in thickness and/or shape along the length of a wind turbine rotor blade. For this purpose a high viscosity adhesive, such as a butyl rubber, can be used, but also other types of such material can be used with success. It is however important that said ductile and/or high viscosity material have the ability to keep its properties regarding flexibility in order to function at a hinge together with the installation flanges and the trailing edge extender at the intersection area of these parts.

A wind turbine rotor blade according to the invention can have a trailing edge part at the trailing edge extender which comprises one or more embedded elements, said embedded elements having a higher stiffness than the installation flanges. The installation flanges will typically be made from a rather soft and deformable material such as polyurethane or the like which easily bends and follows the contour of the trailing edge of a rotor blade. Hence the area between the installation flanges and the trailing edge extender will act as a hinge between said installation flanges and the extender part. The trailing edge part will not increase the aerodynamic loads acting on the rotor blade, as it is flexible due to the lower stiffness in the installation flanges, and the embedded elements will prevent flutter due to the higher stiffness in the extender part.

The trailing edge part can be constructed from e.g. two layers of foil arranged on both sides of one or more elements for embedding said elements between said layers. The layers as well as the elements can be glued together with a suitable glue, but also any suitable kind of welding process can be used, as also any suitable vulcanisation process can be used for joining the various parts.

Further a trailing edge part comprising two installation flanges, an extender part and an intersection area between said parts can be moulded in one piece, or in more that one piece, and elements of different stiffness and/or material can be placed in said mould and be embedded during moulding.

Embedded elements in a trailing edge part can be made from any suitable polymer and/or metal or it can even be made from fibre reinforced precast components comprising glass fibres, carbon fibres or any other type of fibres including mixtures of any types of fibres.

One way of constructing a trailing edge part for a wind turbine rotor blade according to the invention is that said one or more embedded elements are arranged between two layers of foil, where said two layers of foil are extending from the trailing edge extender and constitute said installation flanges. A foil or tape with a first stiffness and an embedded element with a second and higher stiffness will prevent the trailing edge extender from fluttering in the wind, while still being able to adjust according to pressure differences between the flow of air from the pressure side and the suction side of a wind turbine blade. The trailing edge part can be manufactured from two strips of a strong flexible tape to form a sharp trailing edge and to enclose a 5 to 15 millimeter wide/thick strip of a ductile or high viscosity material like e.g. butyl rubber to enable a smooth geometry from the trailing edge to the trailing edge part. The thicker the trailing edge is on the rotor blade, the more ductile material is needed to fill the gap. In practice e.g. three or four different prefabricated types of trailing edge parts with the ductile or high viscosity material enclosed can cover all trailing edge thicknesses from 2 to 15 millimeters as the ductile and/or high viscosity material will be deformed during installation to fill out the gap between the trailing edge and the intersection area between the installation flanges and the extender part at the trailing edge part.

A wind turbine rotor blade according to the invention can e.g. comprise a trailing edge part which at said inner surface of said installation flanges on the trailing edge part is self adhesive. The foil or tape that constitutes the installation flanges can be a polyurethane foil e.g. a type of foil also known as "helicopter tape" that has been used as a cover along the leading edge of wind turbine rotor blades to prevent erosion. By having the inner surfaces made self adhesive, installation becomes very simple and easy to carry out, which especially is an advantage when installation is done on rotor blades already installed. Installation of trailing edge parts on rotor blades that is not installed is easier when the installation flanges are self-adhesive.

Furthermore, the installation flanges can be made self-adhesive as the embedded element in the extender part can be arranged between two self-adhesive layers of foil or tape. Then only the inner side of the installation flanges will have a protective backing tape.

A wind turbine rotor blade according to the invention can have a trailing edge part comprising a more or less straight trailing edge at the outer most extreme edge of the trailing edge extender.

A wind turbine rotor blade according to the invention can have a trailing edge part comprising a serrated trailing edge at the outer most extreme edge of the trailing edge extender.

The outermost extreme edge of the trailing edge extender can be straight or serrated depending on the specific job to solve a specific problem.

The invention further comprises a method for fitting a wind turbine rotor blade with a trailing edge part according to the above description, where said method at least comprises two of the following steps:
- preparing the trailing edge of a wind turbine rotor blade for installation of a trailing edge part;
- selecting a trailing edge part from a selection of trailing edge parts;
- arranging the selected trailing edge part along the trailing edge of the wind turbine rotor blade such that a deformable and ductile material is pressed against the trailing edge of the wind turbine blade to secure a good contact by filling a gap between said trailing edge and said area and to create a flexible area where the trailing edge extender can bend according to the pressure difference between the pressure side and the suction side;
- adhering a first of two installation flanges to the pressure side or the suction side of a wind turbine rotor blade, and along the trailing edge;
- adhering a second of two installation flanges to the other one of either the pressure side or the suction side of a wind turbine rotor blade, and along the trailing edge.

Installation of a trailing edge part according to the invention can e.g. comprise the using of several different types of trailing edge parts as the thickness of the trailing edge of the rotor blade may vary over the length. One type of trailing edge part can e.g. be designed to cover a trailing edge thickness of 1 to 5 millimetres and another type to cover a trailing edge thickness from 5 to 10 millimetres and yet another type to cover from 10 to 20 millimetres.

Further a trailing edge part according to the invention can be designed with various shapes at the outermost extreme edge of the trailing edge extender. It can be straight or serrated in many different ways, and the extender part can be designed with different length matching to different situations. An extender part can e.g. have a straight outermost extreme edge with a length of 30 to 70 millimetres or even more and a thickness at the extender part of e.g. 1 to 3 millimetres, for example 2 millimetres.

A method according to the invention may further comprise at least the steps of:
- removing a backing tape from the inside surface of a first of two installation flanges thus uncovering an adhesive on the inner surface of said installation flange;
- pressing said installation flange against the surface of the pressure side or the suction side of said wind turbine rotor blade;
- removing a backing tape from the inside surface of a second of two installation flanges thus uncovering an adhesive on the inner surface of said installation flange;
- pressing said installation flange against the surface of the other one of either the pressure side or the suction side of said wind turbine rotor blade.

A method according to the invention will typically also comprise preparing the trailing edge of a wind turbine rotor blade for installation of a trailing edge part, where said preparing may include at least one of the following steps:
- cleaning;
- grinding;
- priming and/or;
- polishing an area along the trailing edge on the pressure side as well as on the suction side of a wind turbine rotor blade, prior to installing said trailing edge part.

Dependent on the shape and condition of the trailing edge and on the specification of the adhesive to be used, there may be different, more or less demanding, claims to fulfil in order to obtain a proper adhesion between the trailing edge and the trailing edge part.

The outside of the installation flanges and also of the extender part of the trailing edge part can be covered by a thin protection foil. Said protection foil will prevent the trailing edge part from being damaged during manufacturing and especially during installation, as there is a need for at least the installation flanges to be worked at during installation at the trailing edge. The installation flanges will typically be adhered to the trailing edge and will have to be pushed against the trailing edge/suction side/pressure side e.g. by some kind of roller tool or by manual rubbing with a hand. After successful installation the protective foil can easily be removed by a simple peeling.

A trailing edge part according to the invention does not increase aerodynamic loads on the rotor blade, since it is flexible and will follow the wind, it will reduce aerodynamic noise significantly, and it is cheap to manufacture and cheap to install e.g. on site prior to the installation of a rotor blade or with the rotor blade installed at the wind turbine.

### Description of the Drawing

An embodiment of the invention will now be described by way of example only and with reference to the accompanying drawings, in which:
- Fig. 1: shows a wind turbine
- Fig. 2: shows a cross section of a wind turbine rotor blade
- Fig. 3: shows a trailing edge part where the outermost extreme edge of the trailing edge extender is straight.
- Fig. 4: shows a trailing edge part where the outermost extreme edge of the trailing edge extender is serrated.
- Fig. 5: shows a part of a cross section of a wind turbine rotor blade and of a trailing edge part.
- Fig. 6: shows a part of a cross section of a wind turbine rotor blade with a trailing edge part installed.
- Fig. 7: shows a wind turbine rotor blade with a straight trailing edge part.
- Fig. 8: shows a wind turbine rotor blade with a serrated trailing edge part.

In the following text the figures will be described one by one, and the different parts and positions seen in the figures will be numbered with the same numbers in the different figures. Not all parts and positions indicated in a specific figure will necessarily be discussed together with that figure.

### Position number list

- 1: wind turbine
- 2: tower
- 3: foundation
- 4: nacelle
- 5: hub
- 6: wind turbine rotor blade
- 7: first end of blade
- 8: second end of blade
- 9: cross section of a wind turbine blade
- 10: leading edge
- 11: trailing edge
- 12: pressure side
- 13: suction side
- 14: trailing edge part
- 15: first installation flange
- 16: second installation flange
- 17: trailing edge extender
- 18: intersection area
- 19: ductile material in the intersection area
- 20: outermost extreme edge of the trailing edge extender
- 21: blunt part of trailing edge
- 22: embedded part in trailing edge extender

### Detailed Description of the Invention

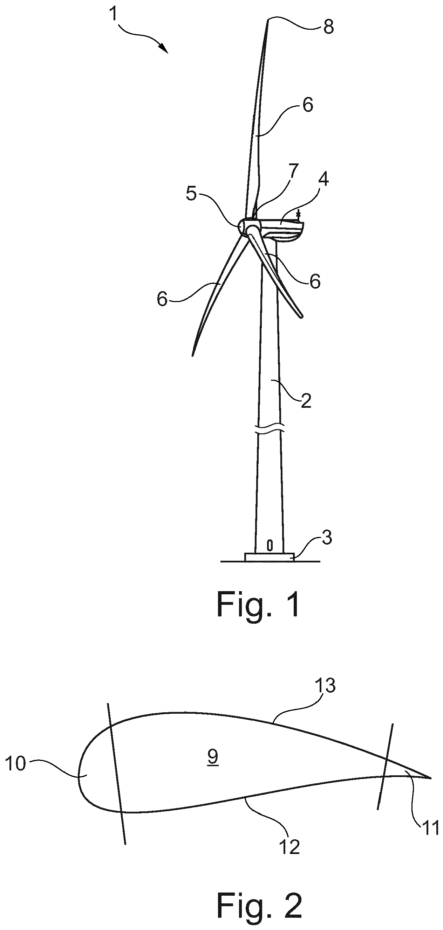

In fig. 1 a typical wind turbine 1 is seen comprising a tower 2 installed at a foundation 3. At the top of the tower 2 a nacelle 4 comprising e.g. a gearbox, a generator and other components is seen. At the nacelle 4 there is also installed a shaft for carrying a rotor comprising a hub 5 and three wind turbine rotor blades 6. The rotor blades 6 are arranged at the hub 5 at a first end 7 called the root end of the rotor blade 6. The second end 8 of the rotor blades 6 constitutes a tip end.

Fig. 2 shows a cross section of a wind turbine rotor blade 6 with a leading edge 10 and a trailing edge 11 connected by a pressure side 12 and a suction side 13 of the specific air foil profile. Both the leading edge 10 and the trailing edge 11 are depicted as an area behind a line as the terms "leading edge 10" and "trailing edge 11" more or less refers to an area and not a well defined line. One could argue that at least the trailing edge 11 is very well defined as it is the outermost extreme edge of the blade 6, where the air flow from the pressure side 12 meets with the air flow from the suction side 13, but the trailing edge 11 is very hard to manufacture and to handle with a sharp edge, which is the theoretical optimum, and sometimes the airfoil is designed as a truncated profile, where the trailing edge 11 is blunt. In this case the terms leading edge 10 and trailing edge 11 are to be understood as the area adjacent the extreme outer edges.

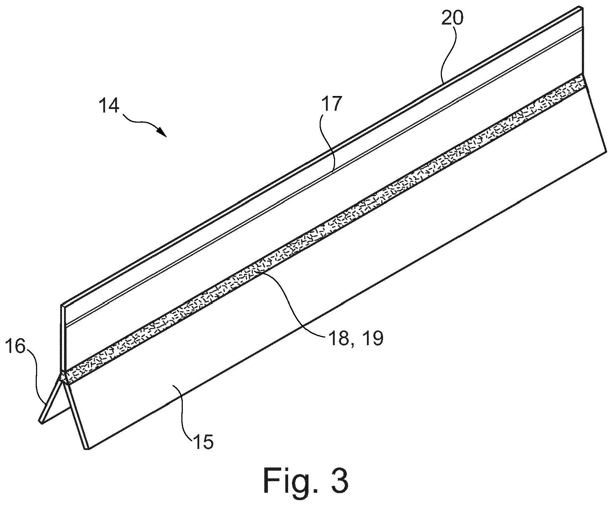

Fig. 3 shows a trailing edge part 14 comprising a first and a second installation flange 15, 16, a trailing edge extender 17, an intersection area 18, where the first and second installation flanges 15, 16 meet with the trailing edge extender 17. In said intersection area 18 a ductile or high viscosity material 19 is arranged. The ductile or high viscosity material 19 serves the purpose of being deformable in order to be pressed against the trailing edge 11 of the wind turbine rotor blade 6 to secure a good contact and to create a flexible area where the trailing edge extender 17 can bend according to the pressure difference between the pressure side 12 and the suction side 13. The ductile or high viscosity material 19 can thus be a suitable kind of rubber e.g. a butyl rubber, and it can also be a kind of adhesive which also can be a kind of butyl rubber or another suitable material. In fig. 3 the outermost extreme edge 20 of the trailing edge extender 17 is straight and only a very few millimetres thick.

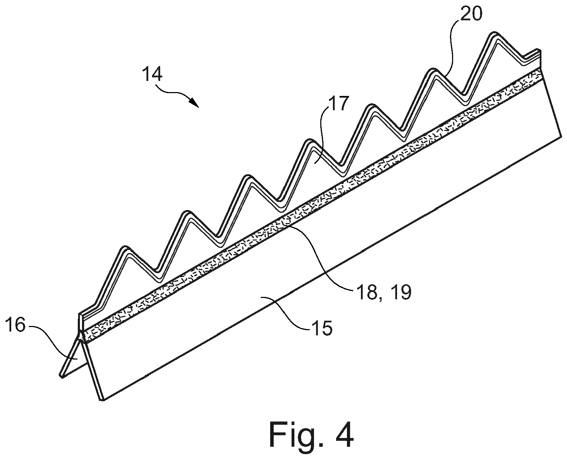

Fig. 4 shows mainly the same as fig. 3 but in this figure the trailing edge part 14 is seen with the outermost extreme edge 20 of the trailing edge extender 17 serrated. The serrations are triangles but could as well have been of a different but also suitable shape to lower the aerodynamically generated noise from the trailing edge 11/trailing edge extender 17.

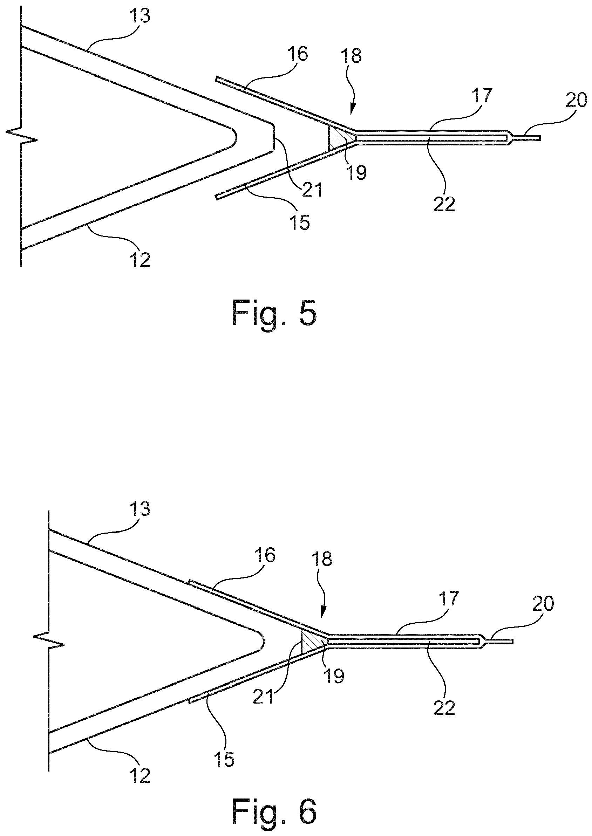

Fig. 5 shows a part of a cross section of a wind turbine rotor blade 6 and a trailing edge part 14. In this figure it is clearly seen that the trailing edge part 14 comprises a foil or tape constituting the first installation flange 15 which will be fitted at the pressure side 12 of the wind turbine rotor blade 6 and which further comprises a foil or tape constituting the second installation flange 16 which will be fitted at the suction side 13 of the wind turbine rotor blade 6. Further said foil or tape is embedding one or more elements 21 to give some structural stiffness to the trailing edge extender 17 in order to prevent the trailing edge extender 17 from fluttering due to turbulence in the flow of air. In the intersection area 18 a ductile or high viscosity material 19 is arranged having a thickness and shape that can be adjusted manually by plastic deformation during installation to fit the blunt part 21 of the trailing edge 11 when the trailing edge part 14 is installed.

Fig. 6 shows a part of a cross section of a wind turbine rotor blade 6 with a trailing edge part 14 installed. Here the ductile and/or high viscosity material 19 is seen abutting the blunt part 22 of the trailing edge 11, and the first and second installation flanges 15, 16 are seen installed at the respective surfaces 12, 13. The foil or tape that constitutes the skin of the trailing edge part can be made from any suitable material, e.g. polyurethane, which is resistant and strong, would be suitable. In fig. 6 at the outermost extreme edge 20 of the trailing edge extender 17 the two skin layers are fixed to each other to form a very thin edge. The installation flanges 15, 16 can be manufactured as self-adhesive, which will lead to a very easy installation on the trailing edge 11. Further the element or elements 22 can be arranged between two layers foil/tape and be fixed by adhesive that is applied during assembly or by a self-adhesive layer on the foil/tape. The complete trailing edge part 14 can of cause also be moulded into a desired shape instead of being assembled from parts.

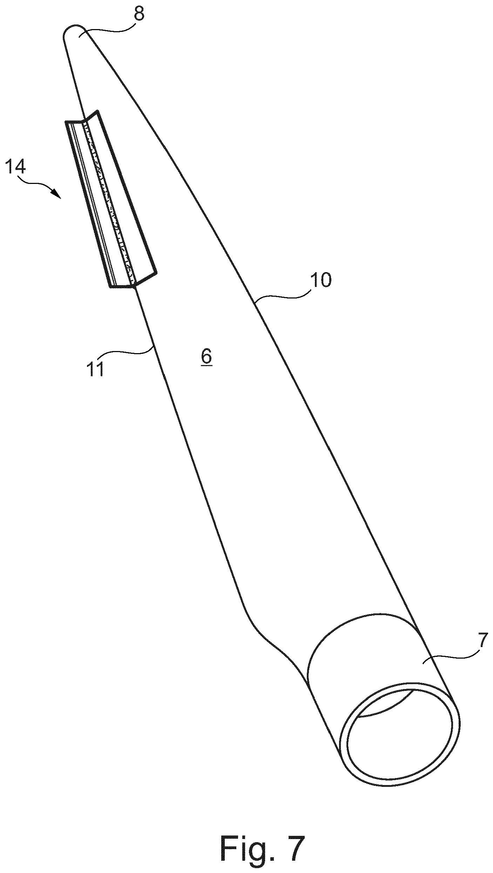

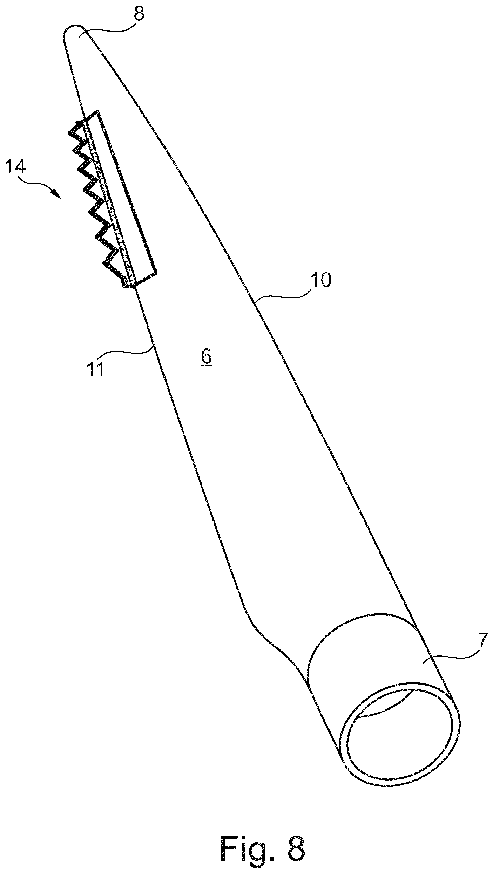

In fig. 7 and 8 a wind turbine rotor blade 6 is seen with respectively a straight trailing edge part 14 as seen in fig. 3 and with a serrated trailing edge part 14 as seen in fig. 4. The trailing edge part 14 is installed at the wind turbine rotor blade as a section towards the tip end 8 of the blade, where typically a specific reason for installing such a trailing edge part 14 to reduce aerodynamic noise exists.

The invention is not limited to the embodiments described herein, and may be modified or adapted without departing from the scope of the present invention as described in the patent claims below.

## Claims

1. A wind turbine rotor blade (6) suitable for a modern wind turbine (1), said wind turbine rotor blade (6) having a length extending from a first end (7), e.g. a root end, to a second end (8), e.g. a tip end, said wind turbine rotor blade (6) further comprises a leading edge (10) and a trailing edge (11), where a pressure side (12) and a suction side (13) extend between said leading edge (10) and trailing edge (11) and thus defines an airfoil shaped cross section (9), where said trailing edge (11) along at least a part of said length of the wind turbine rotor blade (6) comprises a trailing edge part (14), said trailing edge part (14) comprises a first (15) and a second (16) installation flange each with a width, **characterised by** said installation flanges (15, 16) being arranged in connection with a trailing edge extender (17), where said first and second installation flanges (15, 16) both comprise an inner surface for installation on the pressure side (12) and the suction side (13) of said wind turbine rotor blade (6) whereby said trailing edge part (14) comprises an area (18) at the intersection between said two installation flanges (15, 16) and said trailing edge extender (17), where a ductile material (19), e.g. a high viscosity adhesive, is arranged in said area (18), wherein the ductile material (19) is deformable in order to be pressed against the trailing edge (11) of the wind turbine rotor blade (6) to secure a good contact by filling a gap between said trailing edge (11) and said area (18) and to create a flexible area where the trailing edge extender (17) can bend according to the pressure difference between the pressure side (12) and the suction side (13).

2. A wind turbine rotor blade (6) according to claim 1 **characterised in that** said trailing edge part (14) at the trailing edge extender (17) comprises one or more embedded elements (22), said embedded elements (22) having a higher stiffness than the installation flanges (15, 16).

3. A wind turbine rotor blade (6) according to claim 2 **characterised in that** said one or more embedded elements (22) are arranged between two layers of foil, where said two layers of foil are extending from the trailing edge extender (17) and constitute said installation flanges (15, 16).

4. A wind turbine rotor blade according to any of the claims 1 to 3 **characterised in that** said inner surface of said installation flanges on the trailing edge part is self-adhesive.

5. A wind turbine rotor blade (6) according to any of the claims 1 to 4 **characterised in that** said trailing edge part (14) comprises a more or less straight trailing edge at the outermost extreme edge (20) of the trailing edge extender (17).

6. A wind turbine rotor blade according to any of the claims 1 to 4 **characterised in that** said trailing edge part (14) comprises a serrated trailing edge at the outermost extreme edge (20) of the trailing edge extender (17).

7. A method for fitting a wind turbine rotor blade (6) with a trailing edge part (14) according to claim 1 to 6 **characterised in that** said method at least comprises three of the following steps:
- preparing the trailing edge (11) of a wind turbine rotor blade (6) for installation of a trailing edge part (14);
- selecting a trailing edge part (14) from a selection of trailing edge parts (14);
- arranging the selected trailing edge part (14) along the trailing edge (11) of the wind turbine rotor blade (6) such that a deformable and ductile material (19) is pressed against the trailing edge (11) of the wind turbine rotor blade (6) to secure a good contact by filling a gap between said trailing edge (11) and said area (18) and to create a flexible area where the trailing edge extender (17) can bend according to the pressure difference between the pressure side (12) and the suction side (13);
- adhering a first of two installation flanges (15, 16) to either the pressure side (12) or the suction side (13) of a wind turbine rotor blade (6), and along the trailing edge (11);
- adhering a second of two installation flanges (15, 16) to the other one of either the pressure side (12) or the suction side (131) ofa wind turbine rotor blade (6) and along the trailing edge (11).

8. A method according to claim 7 **characterised in that** said method further comprises at least the steps of:
- removing a backing tape from the inside surface of a first of two installation flanges (15, 16) thus uncovering an adhesive on the inner surface of said installation flange (15, 16);
- pressing said installation flange (15, 16) against the surface of either the pressure side (12) or the suction side (13) of said wind turbine rotor blade (6);
- removing a backing tape from the inside surface of a second of two installation flanges (15, 16) thus uncovering an adhesive on the inner surface of said installation flange (15, 16);
- pressing said installation flange (15, 16) against the surface of the other one of either the pressure side (12) or the suction side (13) of said wind turbine rotor blade (6).

9. A method according to any of the claims 7 to 8 **characterised in that** preparing the trailing edge (11) of a wind turbine rotor blade (6) for installation of a trailing edge part (14) includes at least one of the following steps:
- cleaning;
- grinding;
- priming and/or;
- polishing an area along the trailing edge (11) on the pressure side (12) as well as on the suction side (13) of a wind turbine rotor blade (6) prior to installing said trailing edge part (14).

## Patentansprüche

1. Windkraftanlagen-Rotorschaufel (6), geeignet für eine moderne Windkraftanlage (1), wobei die Windkraftanlagen-Rotorschaufel (6) eine Länge aufweist, die sich von einem ersten Ende (7), z. B. einem Fußende, zu einem zweiten Ende (8), z. B. einem Spitzenende, erstreckt, wobei die Windkraftanlagen-Rotorschaufel (6) ferner eine Anströmkante (10) und eine Abströmkante (11) umfasst, wobei sich eine Druckseite (12) und eine Ansaugseite (13) zwischen der Anströmkante (10) und der Abströmkante (11) erstrecken und somit einen tragflächenförmigen Querschnitt (9) definieren, in dem die Abströmkante (11) entlang zumindest eines Teils der Länge der Windkraftanlagen-Rotorschaufel (6) ein Abströmkantenteil (14) umfasst, wobei das Abströmkantenteil (14) einen ersten (15) und einen zweiten (16) Installationsflansch mit jeweils einer Breite umfasst, **dadurch gekennzeichnet, dass** die Installationsflansche (15, 16) in Verbindung mit einer Abströmkantenverlängerung (17) angeordnet sind, in der der erste und der zweite Installationsflansch (15, 16) jeweils eine Innenfläche zur Installation auf der Druckseite (12) und der Ansaugseite (13) der Windkraftanlagen-Rotorschaufel (6) umfassen, wodurch das Abströmkantenteil (14) einen Bereich (18) am Schnittpunkt zwischen zwei Installationsflanschen (15, 16) und der Abströmkantenverlängerung (17) umfasst, in der ein biegsames Material (19), z. B. ein Klebstoff mit hoher Viskosität, in dem Bereich (18) angeordnet ist, wobei das biegsame Material (19) verformbar ist, um gegen die Abströmkante (11) der Windkraftanlagen-Rotorschaufel (6) gedrückt zu werden, um einen guten Kontakt sicherzustellen, indem ein Spalt zwischen der Abströmkante (11) und dem Bereich (18) gefüllt wird, und um einen flexiblen Bereich zu erzeugen, in dem die Abströmkantenverlängerung (17) gemäß der Druckdifferenz zwischen der Druckseite (12) und der Ansaugseite (13) gebogen werden kann.

2. Windkraftanlagen-Rotorschaufel (6) nach Anspruch 1, **dadurch gekennzeichnet, dass** das Abströmkantenteil (14) an der Abströmkantenverlängerung (17) ein oder mehrere integrierte Elemente (22) umfasst, wobei die integrierten Elemente (22) eine höhere Steifigkeit als die Installationsflansche (15, 16) aufweisen.

3. Windkraftanlagen-Rotorschaufel (6) nach Anspruch 2, **dadurch gekennzeichnet, dass** das eine oder die mehreren integrierten Elemente (22) zwischen zwei Folienschichten angeordnet sind, wobei sich die zwei Folienschichten von der Abströmkantenverlängeurng (17) erstrecken und die Installationsflansche (15, 16) bilden.

4. Windkraftanlagen-Rotorschaufel nach einem der Ansprüche 1 bis 3, **dadurch gekennzeichnet, dass** die Innenfläche der Installationsflansche an dem Abströmkantenteil selbstklebend ist.

5. Windkraftanlagen-Rotorschaufel (6) nach einem der Ansprüche 1 bis 4, **dadurch gekennzeichnet, dass** das Abströmkantenteil (14) eine mehr oder weniger gerade Abströmkante an der alleräußersten Kante (20) der Abströmkantenverlängerung (17) umfasst.

6. Windkraftanlagen-Rotorschaufel nach einem der Ansprüche 1 bis 4, **dadurch gekennzeichnet, dass** das Abströmkantenteil (14) eine gezackte Abströmkante an der alleräußersten Kante (20) der Abströmkantenverlängeurng (17) umfasst.

7. Verfahren zum Einbau einer Windkraftanlagen-Rotorschaufel (6) mit einem Abströmkantenteil (14) nach Anspruch 1 bis 6, **dadurch gekennzeichnet, dass** das Verfahren mindestens drei der folgenden Schritte umfasst:
- Vorbereiten der Abströmkante (11) einer Windkraftanlagen-Rotorschaufel (6) für den Anbau eines Abströmkantenteils (14);
- Auswählen eines Abströmkantenteils (14) aus einer Auswahl von Abströmkantenteilen (14);
- Anordnen des ausgewählten Abströmkantenteils (14) entlang der Abströmkante (11) der Windkraftanlagen-Rotorschaufel (6), so dass ein verformbares und biegsames Material (19) gegen die Abströmkante (11) der Windkraftanlagen-Rotorschaufel (6) gedrückt wird, um einen guten Kontakt sicherzustellen, indem ein Spalt zwischen der Abströmkante (11) und dem Bereich (18) gefüllt wird, und um einen flexiblen Bereich zu erzeugen, in dem die Abströmkantenverlängerung (17) gemäß der Druckdifferenz zwischen der Druckseite (12) und der Ansaugseite (13) gebogen werden kann;
- Ankleben eines ersten von zwei Installationsflanschen (15, 16) entweder an die Druckseite (12) oder die Ansaugseite (13) der Windkraftanlagen-Rotorschaufel (6) und entlang der Abströmkante (11);
- Ankleben eines zweiten der zwei Installationsflansche (15, 16) an die andere Seite, entweder die Druckseite (12) oder die Ansaugseite (131), einer Windkraftanlagen-Rotorschaufel (6) und entlang der Abströmkante (11).

8. Verfahren nach Anspruch 7, **dadurch gekennzeichnet, dass** das Verfahren mindestens die folgenden Schritte umfasst:
- Entfernen eines Trägerbandes von der Innenfläche eines ersten von zwei Installationsflanschen (15, 16), um somit einen Klebstoff an der Innenfläche des Installationsflansches (15, 16) freizulegen;
- Drücken des Installationsflansches (15, 16) gegen die Oberfläche entweder der Druckseite (12) oder der Ansaugseite (13) der Windkraftanlagen-Rotorschaufel (6);
- Entfernen eines Trägerbandes von der Innenfläche eines zweiten der zwei Installationsflansche (15, 16), um somit einen Klebstoff an der Innenfläche des Installationsflansches (15, 16) freizulegen;
- Drücken des Installationsflansches (15, 16) gegen die Oberfläche der anderen Seite, entweder der Druckseite (12) oder der Ansaugseite (13), der Windkraftanlagen-Rotorschaufel (6).

9. Verfahren nach einem der Ansprüche 7 bis 8, **dadurch gekennzeichnet, dass** Vorbereiten der Abströmkante (11) einer Windkraftanlagen-Rotorschaufel (6) für den Anbau eines Abströmkantenteils (14) mindestens einen der folgenden Schritte umfasst:
- Reinigen;
- Schleifen;
- Grundieren und/oder;
- Polieren eines Bereichs entlang der Abströmkante (11) auf der Druckseite (12) sowie auf der Ansaugseite (13) einer Windkraftanlagen-Rotorschaufel (6) vor dem Anbau des Abströmkantenteils (14).

## Revendications

1. Pale de rotor d'éolienne (6) adaptée pour une éolienne moderne (1), ladite pale de rotor d'éolienne (6) présentant une longueur s'étendant depuis une première extrémité (7), par exemple une extrémité d'emplanture à une seconde extrémité (8), par exemple une extrémité de bout, ladite pale de rotor d'éolienne (6) comprend en outre un bord d'attaque (10) et un bord de fuite (11) où un côté pression (12) et un côté aspiration (13) s'étendent entre ledit bord d'attaque (10) et ledit bord de fuite (11) et définit ainsi une section transversale en forme de profil d'aile (9) où ledit bord de fuite (11) le long d'au moins une partie de ladite longueur de la pale de rotor d'éolienne (6) comprend une partie de bord de fuite (14), ladite partie de bord de fuite (14) comprend une première (15) et une seconde (16) bride d'installation chacune avec une largeur, **caractérisée par**
lesdites brides d'installation (15, 16) étant agencées en connexion avec un élément d'extension de bord de fuite (17), où lesdites première et seconde brides d'installation (15, 16) comprennent à la fois une surface intérieure pour l'installation sur le côté pression (12) et le côté aspiration (13) de ladite pale de rotor d'éolienne (6), moyennant quoi ladite partie de bord de fuite (14) comprend une zone (18) à l'intersection entre lesdites deux brides d'installation (15, 16) et ledit élément d'extension de bord de fuite (17) où un matériau ductile (19) par exemple un adhésif à haute viscosité est agencé dans ladite zone (18), dans laquelle le matériau ductile (19) est déformable afin d'être pressé contre le bord de fuite (11) de la pale de rotor d'éolienne (6) pour fixer un bon contact en remplissant une fente entre ledit bord de fuite (11) et ladite zone (18) et pour créer une zone flexible où l'élément d'extension de bord de fuite (17) peut plier selon la différence de pression entre le côté pression (12) et le côté aspiration (13).

2. Pale de rotor d'éolienne (6) selon la revendication 1, **caractérisée en ce que** ladite partie de bord de fuite (14) sur l'élément d'extension de bord de fuite (17) comprend un ou plusieurs éléments intégrés (22), lesdits éléments intégrés (22) présentant une rigidité supérieure à celle des brides d'installation (15, 16).

3. Pale de rotor d'éolienne (6) selon la revendication 2, **caractérisée en ce que** lesdits un ou plusieurs éléments intégrés (22) sont agencés entre deux couches de film, où lesdites deux couches de film s'étendent depuis l'élément d'extension de bord de fuite (17) et constituent lesdites brides d'installation (15, 16).

4. Pale de rotor d'éolienne selon l'une quelconque des revendications 1 à 3, **caractérisée en ce que** ladite surface intérieure desdites brides d'installation sur la partie de bord de fuite est autoadhésive.

5. Pale de rotor d'éolienne (6) selon l'une quelconque des revendications 1 à 4, **caractérisée en ce que** ladite partie de bord de fuite (14) comprend un bord de fuite plus ou moins droit sur le bord extrême le plus extérieur (20) de l'élément d'extension de bord de fuite (17).

6. Pale de rotor d'éolienne selon l'une quelconque des revendications 1 à 4, **caractérisée en ce que** ladite partie de bord de fuite (14) comprend un bord de fuite dentelé sur le bord extrême le plus extérieur (20) dudit élément d'extension de bord de fuite (17).

7. Procédé d'équipement d'une pale de rotor d'éolienne (6) avec une partie de bord de fuite (14) selon la revendication 1 à 6, **caractérisé en ce que** ledit procédé comprend au moins trois des étapes suivantes :
- préparation du bord de fuite (11) d'une pale de rotor d'éolienne (6) pour l'installation d'une partie de bord de fuite (14) ;
- sélection d'une partie de bord de fuite (14) parmi une sélection de parties de bord de fuite (14) ;
- agencement de la partie de bord de fuite sélectionnée (14) le long du bord de fuite (11) de la pale de rotor d'éolienne (6) de sorte qu'un matériau déformable et ductile (19) soit pressé contre le bord de fuite (11) de la pale de rotor d'éolienne (6) pour fixer un bon contact en remplissant une fente entre ledit bord de fuite (11) et ladite zone (18) et pour créer une zone flexible où l'élément d'extension de bord de fuite (17) peut plier selon la différence de pression entre le côté pression (12) et le côté aspiration (13) ;
- adhésion d'une première des deux brides d'installation (15, 16) à l'un du côté pression (12) ou du côté aspiration (13) d'une pale de rotor d'éolienne (6) et le long du bord de fuite (11) ;
- adhésion d'une seconde des deux brides d'installation (15, 16) à l'autre de l'un du côté pression (12) ou du côté aspiration (131) d'une pale de rotor d'éolienne (6) et le long du bord de fuite (11).

8. Procédé selon la revendication 7, **caractérisé en ce que** ledit procédé comprend en outre au moins les étapes de :
- retrait d'un ruban de support de la surface intérieure d'une première de deux brides d'installation (15, 16) découvrant ainsi un adhésif sur la surface intérieure de ladite bride d'installation (15, 16) ;
- pressage de ladite bride d'installation (15, 16) contre la surface de l'un du côté pression (12) ou du côté aspiration (13) de ladite pale de rotor d'éolienne (6) ;
- retrait d'un ruban de support de la surface intérieure d'une seconde des deux brides d'installation (15, 16) découvrant ainsi un adhésif sur la surface intérieure de ladite bride d'installation (15, 16) ;
- pressage de ladite bride d'installation (15, 16) contre la surface de l'autre du côté pression (12) ou du côté aspiration (13) de ladite pale de rotor d'éolienne (6).

9. Procédé selon l'une quelconque des revendications 7 à 8, **caractérisé en ce que** la préparation du bord de fuite (11) d'une pale de rotor d'éolienne (6) pour l'installation d'une partie de bord de fuite (14) inclut au moins une des étapes suivantes :
- nettoyage ;
- meulage ;
- application de la couche de fond et/ou ;
- polissage d'une zone le long du bord de fuite (11) sur le côté pression (12) ainsi que sur le côté aspiration (13) d'une pale de rotor d'éolienne (6) avant l'installation de ladite partie de bord de fuite (14).
